# EUROPÄISCHE PATENTSCHRIFT

(11) **EP 4 183 029 B1**
(45) Veröffentlichungstag und Bekanntmachung des Hinweises auf die Patenterteilung: **01.04.2026**
(21) Anmeldenummer: 21742096.7
(22) Anmeldetag: 06.07.2021
(51) Int. Cl.: H02K 3/50, H02K 15/35, H02K 15/00

(54) **STATOR EINER ELEKTRISCHEN MASCHINE**
STATOR OF AN ELECTRIC MACHINE
STATOR D'UNE MACHINE ÉLECTRIQUE

(30) Priorität: 16.07.2020 DE 102020208921
(43) Veröffentlichungstag der Anmeldung: 24.05.2023
(73) Patentinhaber: Robert Bosch GmbH, 70442 Stuttgart (DE)
(72) Erfinder: HEIDER, Andreas, 70565 Stuttgart (DE); GORANOVIC, Nikola, 30627 Hannover (DE); HEIN, Tobias, 31028 Gronau (Leine) (DE); BOLEY, Meiko, 71229 Leonberg (DE)
(86) Internationale Anmeldenummer: PCT/EP2021/068583
(87) Internationale Veröffentlichungsnummer: WO 2022/012999

(56) Entgegenhaltungen:
- JP-B2- 4 066 834
- US-A1- 2003 137 207
- US-A1- 2009 100 665
- US-A1- 2019 036 428
- US-A1- 2019 280 542

## Beschreibung

### Stand der Technik

Die vorliegende Erfindung betrifft einen Stator einer elektrischen Maschine. Der Stator der elektrischen Maschine weist eine optimierte Verbindung von Leiterenden einer Steckwicklung auf. Außerdem betrifft die Erfindung eine elektrische Maschine aufweisend einen derartigen Stator und ein Verfahren zum Herstellen eines derartigen Stators.

Aus dem Stand der Technik (z.B. US 2003/137207 A1) sind elektrische Maschinen bekannt, deren Statoren Steckwicklungen aufweisen. Hierbei werden Leiterelemente in U-Form oder I-Form durch einen Statorkörper gesteckt, wobei Enden dieser Leiterelemente miteinander verschweißt werden. Sind die Enden der Leiterelemente nicht vollständig elektrisch abisoliert, so besteht die Gefahr, dass Isolierungsrückstände während des Schweißvorgangs erwärmt werden und verdampfen, wodurch es zu Prozessunregelmäßigkeiten kommen kann. Um dies zu vermeiden werden zu verschweißende Leiterenden beispielsweise vor dem Verschweißen nicht vollständig zusammengeführt oder mit reduzierter Spannkraft verspannt, um somit ein Ausgasen der Isolationsrückstände zu ermöglichen.

### Offenbarung der Erfindung

Der erfindungsgemäße Stator einer elektrischen Maschine ermöglicht einerseits ein zuverlässiges Ausgasen von möglicherweise vorhandenen Isolationsrückständen oder Verschmutzungen oder sonstigen Kontaminationen, beispielsweise mit Schmiermittel, während gleichzeitig ein vollständiges Verspannen der zu verschweißenden Leiterenden ermöglicht ist. Damit ist außerdem eine definierte Spannungssituation während des Verspannens erreichbar, wodurch der nachfolgende Schweißprozess zuverlässig und fehlerfrei durchführbar ist. Insgesamt wird somit die Qualität der elektrischen und mechanischen Verbindung benachbarter Leiterenden erhöht.

Der Stator einer elektrischen Maschine weist eine Statorachse auf. Außerdem weist der Stator einen Statorkörper auf, der sich um besagte Statorachse erstreckt. Der Statorkörper wiederum weist Statornuten auf, in denen eine elektrische Steckwicklung verläuft. Die elektrische Steckwicklung ist aus einer Vielzahl von Leiterelementen gebildet, wobei Leiterelemente vorgesehen sind, die jeweils mit Leiterschenkeln durch eine oder zwei der Statornuten verlaufen. An zumindest einer Stirnseite des Stators stehen die Leiterelemente mit Leiterenden aus den Statornuten vor und bilden einen Wickelkopf. Diese Leiterelemente sind beispielsweise U-förmig oder I-förmig ausgebildet.

Die Leiterenden der Leiterelemente sind im jeweiligen Wickelkopf in mehrere in Umfangsrichtung bezüglich der Statorachse verteilten Gruppen angeordnet. Jede Gruppe weist mehrere entlang einer bezüglich der Statorachse radialen Richtung angeordnete Leiterenden auf. Besonders vorteilhaft sind die Leiterenden in radialer Richtung fluchtend angeordnet.

Sollen Leiterenden verschweißt werden um aus den einzelnen Leiterelementen eine Wicklung herzustellen, so werden insbesondere radial benachbart angeordnete Leiterenden verschweißt. Um eine Verspannung der Leiterenden einfach und aufwandsarm durchzuführen ist insbesondere vorgesehen, dass zumindest eine Leiterelement, insbesondere mehrere Leiterenden, jeder Gruppe in radialer Richtung gesehen beidseitig angeordnete erhabene Strukturen aufweist. Diese Strukturen sind derart angeordnet, dass zumindest eine erhabene Struktur auf einer ersten Seite des Leiterelements bei einem Einspannen der gesamten Gruppe von Leiterenden zwischen zwei Spannbacken eine durch die Spannbacken elastisch oder plastisch bewirkte Annäherung zwischen dem zur ersten Seite benachbarten Leiterende und dem die beidseitig angeordneten erhabenen Strukturen aufweisenden Leiterende zum Verschweißen der betreffenden Leiterenden zulassen. Zumindest eine erhabene Struktur ist auf einer der ersten Seite gegenüberliegenden zweiten Seite angeordnet und hält einen Abstand zwischen dem zur zweiten Seite benachbarten Leiterende und dem die beidseitig angeordneten erhabenen Strukturen aufweisenden Leiterende aufrecht, um ein Verschweißen der betreffenden Leiterenden zu verhindern.

Somit ermöglicht der Stator durch die Verwendung der beschriebenen Strukturen ein sicheres und zuverlässiges Verschweißen von entsprechenden Leiterenden. Vor dem Verschweißen erfolgt ein Einspannen der gesamten Gruppe radial angeordneter Leiterenden, sodass dieser Einspannprozess einfach und aufwandsarm durchgeführt werden kann. Sind die Leiterenden eingespannt, so kann eine definierte Spannungssituation erreicht werden, insbesondere ist die Spannkraft nicht von äußeren Einflüssen wie durch die Prozesssicherheit aufgrund ausgasender Isolationsrückstände beeinflusst. Dies ermöglicht ein optimales Verspannen der Leiterenden.

Durch die entsprechenden erhabenen Strukturen, die an zumindest einem Leiterende beidseitig angeordnet sind, wird außerdem festgelegt, welche Leiterenden sich annähern sollen und welche Leiterenden beabstandet bleiben. Die entsprechenden erhabenen Strukturen ermöglichen ein Annähern von zu verschweißenden Leiterenden, wobei ein entsprechend benachbart zu dem Leiterende mit den beidseitig erhabenen Strukturen angeordnetes Leiterende elastisch oder plastisch verformt wird. Zusätzlich ermöglichen die Strukturen ein Beibehalten eines Abstands zu einem gegenüberliegend angeordneten Leiterende, sodass ein Verschweißen hier nicht möglich ist. Damit ist erreichbar, dass insbesondere lediglich zwei benachbarte Leiterenden verschweißt werden. Auf diese Weise lässt sich einfach und aufwandsarm die Steckwicklung ausbilden.

Die Leiterenden sind aufgrund der erhabenen Strukturen vorteilhafterweise nur in einem zu verschweißenden Bereich zusammengeführt. Andere Bereiche werden weiterhin durch die Strukturen beabstandet, sodass sich Entgasungskanäle ausbilden, entlang derer eine Entgasung von verdampfenden Isolationsrückständen ermöglicht ist. Somit ist eine Fügequalität zweier zu verbindender Leiterenden erhöht.

Die Unteransprüche haben bevorzugte Weiterbildungen der Erfindung zum Inhalt.

Bevorzugt ist vorgesehen, dass jede erhabene Struktur einer erhabenen Struktur eines anderen Leiterendes oder einer Seitenfläche eines anderen Leiterendes gegenüberliegend angeordnet ist. Sind zwei erhabene Strukturen zweier verschiedener Leiterenden gegenüberliegend angeordnet, so kann ein Abstand zwischen diesen beiden Leiterenden maximiert werden. Es ist dabei vorgesehen, dass die Leiterenden, die nicht miteinander verbunden werden sollen, auch durch die erhabenen Strukturen keinerlei elektrischen Kontakt zueinander aufweisen. So erfolgt vorteilhafterweise nach dem Verbinden der zu verbindenden elektrischen Leiterenden ein Trennen solcher Leiterenden, die keinen elektrischen Kontakt aufweisen sollen. Dies kann beispielsweise durch eine entsprechende Biegung der Leiterenden erreicht werden, ebenso kann auch eine elektrische Isolierung zwischen die Leiterenden eingebracht werden.

Jedes Leiterende weist bevorzugt einen unmittelbar an eine Stirnseite des Leiterelements anschließenden und sich in Längsrichtung des Leiterelements erstreckenden ersten Bereich auf. Außerdem weist jedes Leiterende einen unmittelbar an den ersten Bereich anschließenden, sich in Längsrichtung des Leiterelements erstreckenden zweiten Bereich auf. Es ist besonders vorteilhaft vorgesehen, dass sowohl der erste Bereich als auch der zweite Bereich keine elektrische Isolierung aufweisen, wobei besonders vorteilhaft die elektrische Isolierung des Leiterelements an den zweiten Bereich anschließend ausgebildet ist. Mit anderen Worten sind bevorzugt der erste Bereich und der zweite Bereich elektrisch abisoliert. Es ist weiterhin bevorzugt vorgesehen, dass zumindest ein beidseitig Strukturen aufweisendes Leiterende auf der ersten Seite zumindest eine erhabene Struktur an dem zweiten Bereich aufweist, während die ersten Bereiche sowohl des die beidseitig erhabenen Strukturen aufweisenden Leiterendes als auch des auf der ersten Seite benachbarten Leiterendes frei von erhabenen Strukturen sind. Mit anderen Worten ist somit eine Möglichkeit des aneinander Anliegens des die Strukturen aufweisenden Leiterendes und des auf der ersten Seite benachbarten Leiterendes durch zumindest eine Struktur nur im zweiten Bereich erreicht. Das auf der ersten Seite benachbarte Leiterende kann wahlweise eine Struktur im zweiten Bereich aufweisen, kann aber auch ohne Struktur im zweiten Bereich ausgebildet sein. In jedem Fall ist ein Ausbilden von Strukturen im ersten Bereich verhindert. Dadurch ist ermöglicht, dass bei Aufbringen einer Spannkraft eine elastische oder plastische Verformung des auf der ersten Seite benachbarten Leiterendes erfolgt, um die entsprechenden Leiterenden zusammenzuführen und damit verschweißen zu können. In einer alternativen oder zusätzlichen Ausgestaltung ist vorgesehen, dass ein die beidseitig angeordneten erhabenen Strukturen aufweisendes Leiterende auf der zweiten Seite zumindest eine erhabene Struktur an dem ersten Bereich und zumindest eine erhabene Struktur an dem zweiten Bereich aufweist. In diesem Fall ist somit ein Anliegen zu dem auf der zweiten Seite benachbarten Leiterende sowohl im ersten Bereich als auch im zweiten Bereich erreicht. Das auf der zweiten Seite benachbarte Leiterende kann wahlweise keine erhabenen Strukturen oder ebenfalls erhabene Strukturen sowohl in dem ersten Bereich als auch in dem zweiten Bereich aufweisen. Durch die erhabenen Strukturen ist in jedem Fall eine elastische oder plastische Verformung der entsprechenden Leiterenden verhindert, sodass diese Leiterenden auch nicht zusammengeführt werden können. Damit ist auch ein Verschweißen der Leiterenden vermieden. Die erhabenen Strukturen ermöglichen zuverlässig ein Unterscheiden von elektrisch zu verbindenden Leiterenden und elektrisch zu trennenden Leiterenden, wobei gleichzeitig eine Verspannung der gesamten Gruppe von Leiterelementen, beispielsweise durch Spannbacken, ermöglicht ist. Damit ist eine Handhabung der Leiterenden während des Verschweißens einfach und aufwandsarm möglich. Gleichzeitig ermöglichen die Strukturen eine Ausbildung von Entgasungskanälen, durch die verdampfende Isolationsrückstände ausgasen können.

Bevorzugt sind zwei verbundene elektrische Leiterenden derart ausgebildet, dass diese einen stoffflüssigen Verbindungsbereich aufweisen. Der stoffflüssige Verbindungsbereich ist insbesondere eine Schweißnaht. Zumindest eines der zwei elektrisch verbundenen Leiterenden weist vorteilhafterweise eine Ausnehmung auf, die unmittelbar an den Verbindungsbereich anschließt. Durch diese zusätzliche Ausnehmung ist eine weitere Möglichkeit einer Entgasung geschaffen. Werden die beiden Leiterenden verschweißt, so kann verdampfendes Isolationsmaterial durch die Ausnehmung ausgasen. Die Ausnehmung erstreckt sich vorteilhafterweise in radialer Richtung bezüglich der Statorachse entlang des gesamten Leiterelements. Somit ist ein durchgängiger Kanal geschaffen, der ein Ausgasen zuverlässig ermöglicht.

Die erhabenen Strukturen sind bevorzugt durch punktförmige und/oder linienförmige und/oder V-förmige und/oder X-förmige und/oder flächige Erhebungen gebildet. Besonders vorteilhaft sind die Strukturen gleichmäßig angeordnet und erstrecken sich besonders vorteilhaft parallel zur Radialrichtung bezüglich der Statorachse des Stators. Die erhabenen Strukturen können somit zuverlässig einen Abstand zu benachbarten Leiterenden einstellen, wodurch sich die zuvor beschriebenen Effekte in besonders vorteilhafter Weise erreichen lassen.

Die Strukturen sind besonders bevorzugt durch Prägen oder durch ein Auftragsverfahren hergestellt. Beispielsweise lassen sich die Strukturen mittels Laserstrahlen herstellen, wodurch eine Schmelze erzeugt wird, die nach dem Erstarren erhabene Strukturen zurücklässt. Auch ist vorteilhafterweise ein Laserauftragsschweißen der erhabenen Strukturen ermöglicht. Die erhabenen Strukturen können somit beispielsweise durch selektives Laserschmelzen oder Laserabtragen erzeugt werden. Auch kann, wie zuvor beschrieben, ein Prägewerkzeug verwendet werden, sodass die Strukturen aufgeprägt sind.

Die Erfindung betrifft außerdem eine elektrische Maschine. Die elektrische Maschine weist einen Stator auf, wobei der Stator wie zuvor beschrieben ausgebildet ist. Außerdem weist die elektrische Maschine einen Rotor auf, der durch den Stator antreibbar ist. Durch die Verwendung des Stators wie zuvor beschrieben weist dieser optimierte Schweißverbindungen zwischen entsprechend benachbarten Leiterelementen der Steckwicklung auf. Diese optimierte Schweißverbindung ermöglicht somit eine optimierte elektrische und eine optimierte mechanische Verbindung der Leiterenden. Insbesondere ist damit auch eine Wärmeabfuhr während des Betriebs der elektrischen Maschine verbessert. Die elektrische Maschine ist somit robuster ausgestaltet und weist eine längere Lebensdauer auf als im Stand der Technik.

Die Erfindung betrifft schließlich ein Verfahren zum Herstellen eines Stators, insbesondere eines Stators wie zuvor beschrieben, einer elektrischen Maschine. Das Verfahren weist die folgenden Schritte auf: Zunächst erfolgt ein Anordnen von Leiterschenkeln von Leiterelementen einer Steckwicklung in Statornuten eines Statorkörpers, sodass Leiterenden an zumindest einer Stirnseite des Statorkörpers hervorstehen. An dieser Stirnseite des Statorkörpers wird ein Wickelkopf ausgebildet. Dazu werden mehrere im Umfangsrichtung bezüglich einer Statorachse des Stators Körpers verteilte Gruppen gebildet, wobei jede Gruppe mehrere entlang einer bezüglich der Statorachse radialen Richtung angeordnete Leiterenden aufweist. Die Leiterenden sind besonders vorteilhaft in radialer Richtung fluchtend angeordnet.

Anschließend erfolgt das Aufbringen einer Spannkraft. Dies erfolgt durch Einspannen der gesamten Gruppe von Leiterenden zwischen zwei Spannbacken. Zumindest eines, insbesondere mehrere, der Leiterenden jeder Gruppe weisen in radialer Richtung gesehen beidseitig angeordnete erhabene Strukturen auf. Durch die erhabenen Strukturen auf einer ersten Seite des Leiterendes erfolgt aufgrund der Spannkraft eine durch die Spannbacken elastisch oder plastisch bewirkte Annäherung zwischen dem zur ersten Seite benachbarten Leiterende und dem die Strukturen aufweisenden Leiterenden. Außerdem ist durch zumindest eine erhabene Struktur auf einer der ersten Seite gegenüberliegenden zweiten Seite ein Abstand zwischen dem zur zweiten Seite benachbarten Leiterende und dem die Strukturen aufweisenden Leiterende aufrechterhalten. Somit lässt sich die gesamte Gruppe einspannen, aufgrund der vorhandenen Strukturen des zumindest einen Leiterendes ist aber eine Unterteilung zwischen zu verbindenden Leiterenden und zu trennenden Leiterenden vorhanden. Die zu verbindenden Leiterenden werden aneinander angenähert, indem eine elastische oder plastische Verformung eines der Leiterenden erfolgt. Die zu trennenden Leiterenden bleiben beabstandet zueinander angeordnet.

In einem weiteren Schritt erfolgt schließlich ein elektrisches Verbinden des zumindest einen die Strukturen aufweisenden Leiterendes mit dem auf der ersten Seite benachbarten und elastisch oder plastisch verformten Leiterende. Somit lässt sich eine elektrische Verbindung zwischen zwei Leiterenden einfach und aufwandsarm herstellen. Durch die Strukturen ist außerdem ein Entgasungskanal ausgebildet, durch den verdampfende Isolierungsrückstände während des elektrischen Verbindens ausgasen können.

Bevorzugt ist vorgesehen, dass nach dem elektrischen Verbinden ein radialer Abstand zwischen dem die Strukturen aufweisenden Leiterende und dem auf der zweiten Seite benachbarten Leiterende eingebracht wird. Dies erfolgt insbesondere durch Biegen. Dadurch ist erreicht, dass kein aneinander Anliegen dieser Leiterenden erfolgen kann, insbesondere auch nicht über die erhabenen Strukturen. Da die entsprechenden Leiterenden nicht elektrisch verbunden werden sollen, ist durch den Abstand somit ein Kontakt und damit eine elektrische Verbindung verhindert. Zusätzlich ist bevorzugt vorgesehen, dass ein Isolationselement zwischen diese Leiterenden eingebracht wird.

Schließlich ist bevorzugt vorgesehen, dass elektrisch zu verbindende Leiterenden stoffflüssig verbunden werden. Insbesondere erfolgt das stoffflüssige Verbinden durch Verschweißen. Besonders bevorzugt handelt es sich dabei um Laserschweißen. Somit ist eine zuverlässige Verbindung der Leiterenden erreicht, wobei diese sowohl hinsichtlich der elektrischen Güte als auch hinsichtlich der mechanischen Güte optimiert ist. Wie zuvor beschrieben können evtl. vorhandene Isolationsrückstände durch die zuvor beschriebenen Entgasungskanäle ausgasen.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Ansicht einer elektrischen Maschine gemäß einem Ausführungsbeispiel der Erfindung,
- Figur 2: eine schematische Ansicht eines Stators der elektrischen Maschine gemäß dem Ausführungsbeispiel der Erfindung,
- Figur 3: eine erste schematische Ansicht einer Gruppe von Leiterenden des Stators der elektrischen Maschine gemäß dem Ausführungsbeispiel der Erfindung,
- Figur 4: eine zweite schematische Ansicht der Gruppe von Leiterenden des Stators der elektrischen Maschine gemäß dem Ausführungsbeispiel der Erfindung,
- Figur 5: eine dritte schematische Ansicht der Gruppe von Leiterenden des Stators der elektrischen Maschine gemäß dem Ausführungsbeispiel der Erfindung,
- Figuren 6A bis 6F: eine schematische Ansicht verschiedener Ausgestaltungen der Strukturen der Leiterenden des Stators der elektrischen Maschine gemäß dem Ausführungsbeispiel der Erfindung,
- Figuren 7A und 7B: eine schematische Detailansicht zweier Leiterenden des Stators der elektrischen Maschine.

### Ausführungsformen der Erfindung

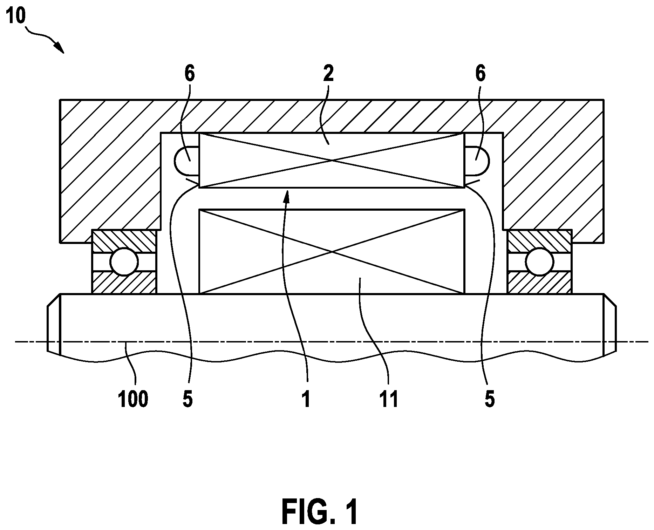

Figur 1 zeigt schematisch eine elektrische Maschine 10 gemäß einem Ausführungsbeispiel der Erfindung. Die elektrische Maschine 10 weist einen Stator 1 auf, der einen Rotor 11 antreibt. Der Stator 1 erstreckt sich dabei um eine Statorachse 100. Die Statorachse 100 ist gleichzeitig eine Mittelachse der elektrischen Maschine 10.

Der Stator 1 weist einen Statorkörper 2 auf, der sich hohlzylinderförmig um die Statorachse 100 erstreckt und an dessen Innenseite der Rotor 11 angeordnet ist. Der Statorkörper 2 dient außerdem zum Aufnehmen einer Steckwicklung, die an Stirnseiten 5 des Statorkörpers 2 jeweils einen Wickelkopf 6 ausbildet.

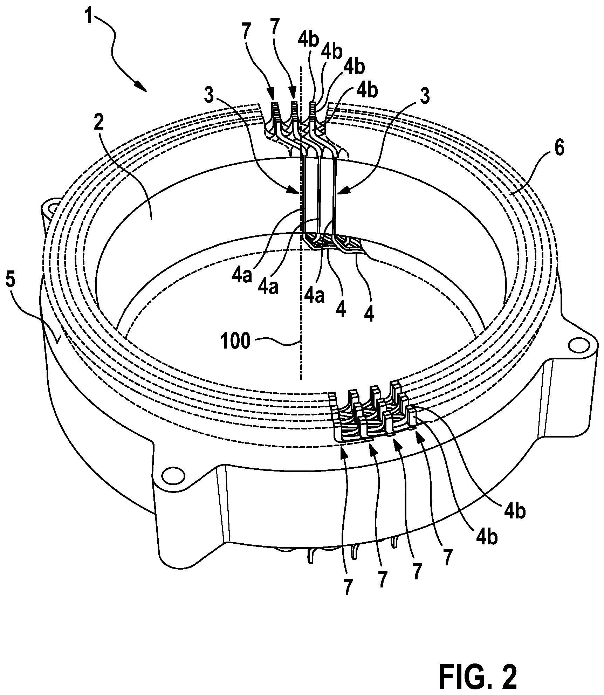

Figur 2 zeigt schematisch den Stator 1 der elektrischen Maschine gemäß dem Ausführungsbeispiel der Erfindung. Der Stator 1 weist zum Aufnehmen der Steckwicklung Statornuten 3 im Statorkörper 2 auf, wobei Leiterschenkel 4a von Leiterelementen 4 durch eine oder zwei der Statornuten 3 verlaufen.

Zum Herstellen der Steckwicklung des Stators 1 werden U-förmige oder I-förmige Leiterelemente 4 verwendet, deren Leiterschenkel somit durch eine oder zwei der Statornuten 3 geführt werden. An zumindest einer Stirnseite 5 bilden diese Leiterelemente 4 somit einen Wickelkopf 6 aus, an dem Leiterenden 4b der Leiterelemente 4 verbunden werden. Insbesondere werden stets zwei Leiterenden 4b miteinander verbunden, um die Steckwicklung herzustellen.

Wie in Figur 2 dargestellt sind um den Umfang des Stators 1 verteilt und in Umfangsrichtung bezüglich der Statorachse 100 beabstandete Gruppen 7 angeordnet, wobei jede Gruppe mehrere Leiterenden 4b aufweist. Die Leiterenden 4b jeder Gruppe sind bezüglich der Statorachse 100 in radialer Richtung, insbesondere radial fluchtend, angeordnet. Jeweils zwei Leiterenden 4b aus dieser Gruppe sollen elektrisch verbunden werden, während die verbleibenden Leiterenden bzw. die verbundenen Leiterenden 4b von anderen Leiterenden 4b bzw. von anderen verbundenen Leiterenden 4b getrennt sein sollen.

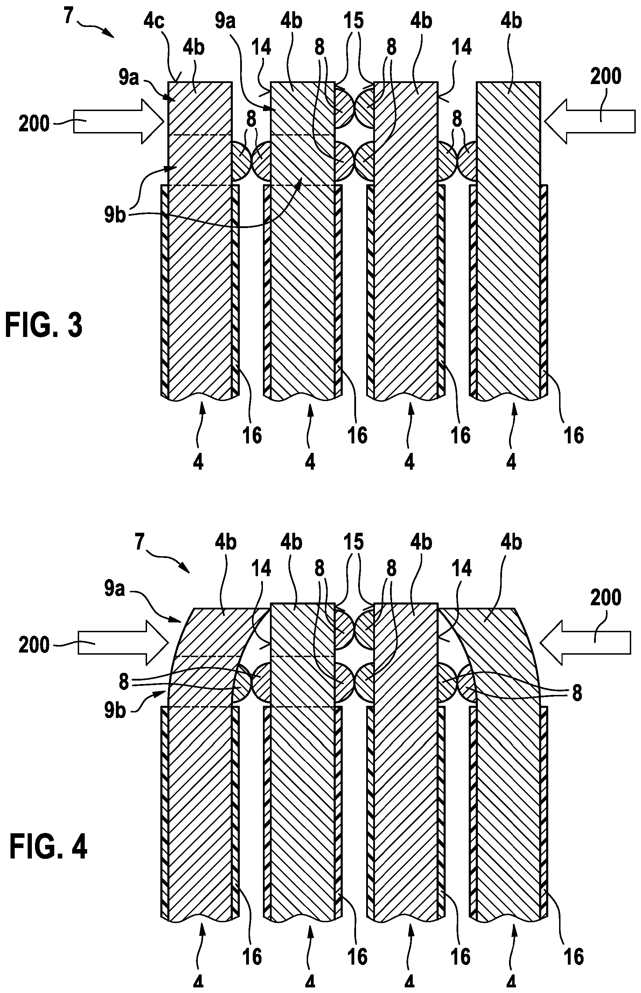

Eine einfache und aufwandsarme Möglichkeit des Verbindens der Leiterenden ist in Figur 3, Figur 4 und Figur 5 gezeigt, die ein Herstellverfahren gemäß einem Ausführungsbeispiel der Erfindung illustrieren und somit eine Anordnung des Stators 1 der elektrischen Maschine 10 gemäß dem Ausführungsbeispiel der Erfindung zeigen. Zur besseren Illustrierung sind in den Figuren 3 bis 5 eine Gruppe 7 von Leiterenden 4b gezeigt, wobei die Gruppe 7 vier Leiterenden 4b aufweisen.

In der Darstellung gemäß Figur 3 sollen jeweils die äußersten Leiterenden 5 mit dem benachbarten mittleren Leiterelement 4 elektrisch verbunden werden. Dazu sind die beiden inneren Leiterenden 4b mit beidseitig erhabenen Strukturen 8 ausgebildet. Die erhabenen Strukturen 8 sind somit bezüglich der Radialrichtung des Stators 1 auf beiden Seiten des Leiterendes 4b aufgebracht. Das Aufbringen kann insbesondere durch ein Laseraufschmelzen oder Laserabtragen erfolgen. Ebenso kann Laserauftragsschweißen zum Herstellen der Strukturen 8 verwendet werden. Schließlich ist ebenso möglich, ein Prägewerkzeug zum Aufprägen der Strukturen 8 zu verwenden.

Die Leiterenden 4 weisen einen ersten Bereich 9a und einen zweiten Bereich 9b auf. Der erste Bereich 9a schließt unmittelbar an eine Stirnseite 4c des entsprechenden Leiterelements 4 an und erstreckt sich in Längsrichtung des Leiterelements 4. Unmittelbar an den ersten Bereich 9a grenzt der zweite Bereich 9b, der sich ebenfalls entlang der Längsrichtung des Leiterelements 4 erstreckt.

Die beiden Leiterenden 4b mit beidseitig erhabenen Strukturen 8 weisen auf jeweils einer ersten Seite 14 nur an dem zweiten Bereich 9b zumindest eine erhabene Struktur 8 auf, während an dem ersten Bereich 9a keinerlei erhabene Struktur auf der ersten Seite 14 angebracht ist. Gleiches gilt für das auf der jeweiligen ersten Seite 14 benachbarte Leiterende 4b, das in Figur 3 lediglich an den zweiten Bereich 9b zumindest eine erhabene Struktur 8 aufweist. In einer alternativen Ausgestaltung kann auch gänzlich auf erhabene Strukturen 8 an dem entsprechenden Leiterende 4b verzichtet werden.

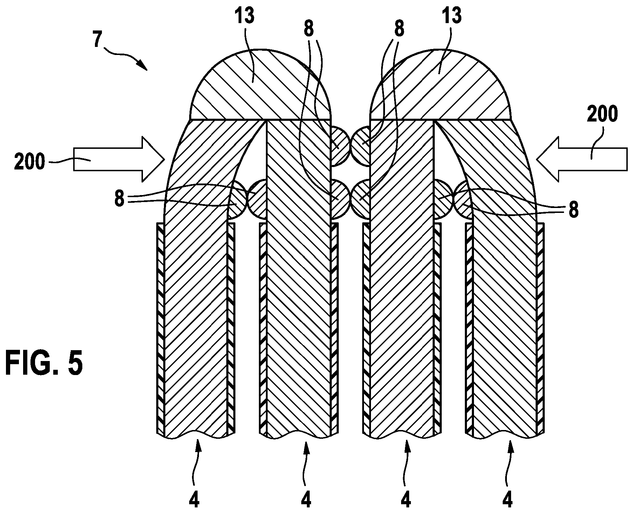

Wird die gesamte Gruppe 7 zwischen Spannbacken (nicht gezeigt) eingespannt, so wird eine Spannkraft 200 aufgebracht. Diese Spannkraft 200 bewirkt dadurch, dass die äußeren Leiterenden 4b elastisch oder plastisch verformt werden, da an den entsprechenden ersten Bereichen 9a keinerlei Abstützung vorhanden ist. Diese elastische oder plastische Verformung ist in Figur 4 dargestellt. Aufgrund der Verformung wird ein Abstand zwischen den jeweiligen die erhabenen Strukturen 8 beidseitig aufweisenden Leiterenden 4b und den entsprechenden auf den ersten Seiten 14 benachbarten Leiterenden 4b verringert. Dieser verringerte Abstand ermöglicht anschließend ein elektrisches Verbinden dieser entsprechenden Leiterenden 4b, was in Figur 5 dargestellt ist. In Figur 5 ist gezeigt, dass die Leiterenden durch einen Verbindungsbereich 13 elektrisch verbunden sind. Der Verbindungsbereich 13 ist bevorzugt ein stoffflüssiger Verbindungsbereich und kann besonders vorteilhaft eine Schweißnaht sein.

Diejenigen Leiterelemente 4, die nicht elektrisch verbunden werden sollen, werden durch die erhabenen Strukturen 8 beabstandet. Dies ist bei den beiden inneren Leiterenden 4b der Fall. Hierzu weisen diese Leiterenden 4b auf den jeweils den ersten Seiten 14 gegenüberliegenden zweiten Seiten 15 sowohl im ersten Bereich 9a als auch im zweiten Bereich 9b zumindest eine Struktur 8 auf. Somit ist eine Abstützung sowohl im ersten Bereich 9a als auch im zweiten Bereich 9b vorhanden, wodurch keine relative Verformung zwischen diesen Leiterenden 4b, das heißt den jeweils auf den zweiten Seiten 15 benachbarten Leiterenden 4b, erfolgen kann. Dies ist in den Figuren 4 und 5 entsprechend dargestellt. Somit ist ein elektrisches Verbinden der entsprechenden auf den zweiten Seiten 15 benachbarten Leiterenden 4b verhindert.

In Figur 5 ist dargestellt, dass die Strukturen 8 auf den zweiten Seiten 15 der die erhabenen Strukturen 8 beidseitig aufweisenden Leiterenden 4b aneinander anliegen. Hierdurch wird ein elektrischer Kontakt geschaffen, der zu vermeiden ist. Somit erfolgt in einem weiteren Schritt ein Trennen dieser Leiterenden 4b, beispielsweise durch Biegen und/oder ein Einbringen einer elektrischen Isolierung zwischen die entsprechenden Leiterenden 4b.

Der erste Bereich 9a und der zweite Bereich 9b sind bevorzugt elektrisch abisoliert, sodass eine elektrische Isolierung 16 an den zweiten Bereich 9b anschließend ausgebildet ist. Ist das Abisolieren des ersten Bereichs 9a und des zweiten Bereichs 9b nicht vollständig durchgeführt worden, so besteht die Möglichkeit, dass während des Aufbringens des stoffflüssigen Verbindungsbereichs 13, insbesondere während des Verschweißens her, Reste der Isolierung ausgasen. Um dies richtet erfolgen zu lassen und um einen Einfluss auf den Verbindungsbereich 13 zu vermeiden werden durch die Strukturen 8 außerdem Entgasungskanäle gebildet. So ist insbesondere durch das Aufbringen der Strukturen 8 auf der ersten Seite 14 im zweiten Bereich 9b erreicht, dass an dieser Stelle ein Abstand zwischen den elektrisch zu verbindenden Leiterenden 4b beibehalten wird. Dieser Abstand ermöglicht ein Ausgasen von verdampfenden Isolierungsrückständen der elektrischen Isolierung 16. Somit ist ein Einfluss dieses Vorgangs auf die elektrische Verbindung, das heißt auf den stoffflüssigen Verbindungsbereich 13, minimiert, wodurch der Verbindungsbereich 13 hochwertig ausgeführt ist.

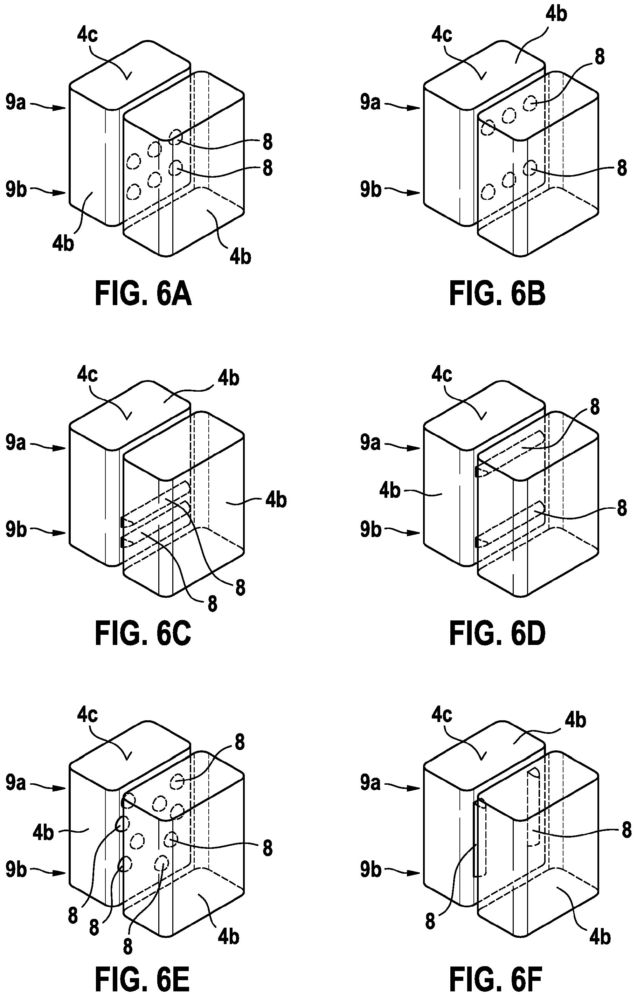

Die Figuren 6a - 6f zeigen verschiedene Ausgestaltungen der Strukturen 8. In den Figuren 6a und 6b ist beispielhaft gezeigt, dass die Strukturen 8-punktförmig ausgebildet sind und sich entlang einer Linie orientieren, die bezüglich der Statorachse 100 radial verläuft. In Figur 6a ist dargestellt, dass lediglich an dem zweiten Bereich 9b Strukturen 8 vorhanden sind. Dahingegen sind in Figur 6b sowohl in dem ersten Bereich 9a als auch in dem zweiten Bereich 9b entsprechende Strukturen 8 vorgesehen. Die Strukturen 8 können je nach Anforderung pro Bereich 9a, 9b einreihig (vgl. Figur 6b) oder zweireihig (vgl. Figur 6a) ausgebildet sein.

Die Figuren 6c und 6d zeigen linienförmige Ausbildungen der Strukturen 8, wobei die Anordnung ansonsten identisch ist wie in den Figuren 6a und 6b. Das heißt, auch die linienförmigen Strukturen 8 sind bezüglich der Statorachse 100 radial orientiert.

In Figur 6e ist eine beliebige Verteilung der punktförmigen Strukturen 8 über den gesamten ersten Bereich 9a und zweiten Bereich 9b vorgesehen. Figur 6f zeigt wiederum linienförmige Strukturen 8, die im Gegensatz zu den Figuren 6c und 6d parallel zur Statorachse 100 ausgebildet sind. In den Figuren 6e und 6f ist somit analog zu den Figuren 6b und 6d keinerlei elastische oder plastische Verformung der benachbarten Leiterenden 4b vorgesehen, sodass an diesen Stellen keine elektrische Verbindung zwischen den benachbarten Leiterenden 4b entstehen soll. Die Figuren 6a und 6c hingegen zeigen die Möglichkeit der elastischen oder plastischen Verformung im ersten Bereich 9a, sodass diese benachbarten Leiterenden 4b elektrisch verbunden werden sollen.

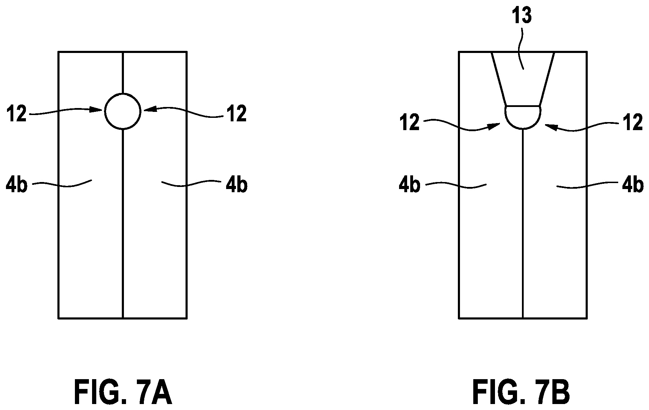

Die Figuren 7a und 7b zeigen schließlich eine weitere Möglichkeit einen all auszugestalteten Punkt dazu ist vorgesehen, dass zumindest eines der beiden elektrisch verbundenen Leiterenden 4b eine Ausnehmung 12 aufweist, die unmittelbar an den Verbindungsbereich 13 anschließt. In Figur 8b ist dieser Verbindungsbereich 13 als Schweißnaht ausgebildet. Figur 8a zeigt die Anordnung vor dem Einbringen des Verbindungsbereichs 13 durch Verschweißen. Die Ausnehmung 12 ist in beiden Leiterenden 4b ausgebildet.

Die Ausnehmung 4b erstreckt sich parallel zu der radialen Richtung bezüglich der Statorachse 100 durch die gesamten Leiterenden 4b, sodass während des Einbringens des Verbindungsbereichs 13 durch Schweißen entstehende Gase durch diese Ausnehmung 12 von den Leiterenden 4b abtransportiert werden können. Die Schweißnaht selbst wird somit durch das Ausgasen evtl. vorhandener Rückstände der elektrischen Isolierung nicht beeinflusst. Dadurch weist die Schweißnaht eine hochwertige Ausgestaltung auf.

## Patentansprüche

1. Stator (1) einer elektrischen Maschine (10) mit einem eine Statorachse (100) aufweisenden Statorkörper (2), der Statornuten (3) umfasst, in denen eine elektrische Steckwicklung verläuft, die aus einer Vielzahl von Leiterelementen (4) gebildet ist, wobei Leiterelemente (4) vorgesehen sind, die jeweils mit Leiterschenkeln (4a) durch eine oder zwei der Statornuten (3) verlaufen und an zumindest einer Stirnseite (5) des Stators (1) mit Leiterenden (4b) aus den Statornuten (3) vorstehen und einen Wickelkopf (6) bilden, wobei die Leiterenden (4b) der Leiterelemente (4) im jeweiligen Wickelkopf (6) in mehreren, in Umfangsrichtung bezüglich der Statorachse (100) verteilten Gruppen (7) angeordnet sind, wobei jede Gruppe (7) mehrere entlang einer bezüglich der Statorachse (100) radialen Richtung angeordnete, insbesondere in radialer Richtung fluchtende, Leiterenden (4b) umfasst,
**dadurch gekennzeichnet, dass**
zumindest eines, insbesondere mehrere, der Leiterenden (4b) jeder Gruppe (7) in radialer Richtung gesehen beidseitig angeordnete erhabene Strukturen (8) aufweist, derart, dass die erhabenen Strukturen (8) auf einer ersten Seite (14) des Leiterendes (4b) bei einem Einspannen der gesamten Gruppe (7) von Leiterenden (4b) zwischen zwei Spannbacken eine durch die Spannbacken elastisch oder plastisch bewirkte Annäherung zwischen dem zur ersten Seite (14) benachbarten Leiterende (4b) und dem Strukturen (8) aufweisenden Leiterende (4b) zum Verschweißen der betreffenden Leiterenden (4b) zulassen und auf einer gegenüberliegenden zweiten Seite (15) einen Abstand zwischen dem zur zweiten Seite (15) benachbarten Leiterende (4b) und dem Strukturen (8) aufweisenden Leiterende (4b) aufrechterhalten, um ein Verschweißen der betreffenden Leiterenden (4b) zu verhindern.

2. Stator (1) nach Anspruch 1, **dadurch gekennzeichnet, dass** jede erhabene Struktur (8) einer erhabenen Struktur (8) eines anderen Leiterendes (4b) oder einer Seitenfläche eines anderen Leiterendes (4b) gegenüberliegend angeordnet ist.

3. Stator (1) nach einem der vorhergehenden Ansprüche, **dadurch gekennzeichnet, dass**
dass jedes Leiterende (4b) einen unmittelbar an eine Stirnseite (4c) des Leiterelements (4) anschließenden, sich in Längsrichtung des Leiterelements (4) erstreckenden, ersten Bereich (9a) und einen unmittelbar an den ersten Bereich (9a) anschließenden, sich in Längsrichtung des Leiterelements (4) erstreckenden, zweiten Bereich (9b) aufweist,
dass zumindest ein Strukturen (8) aufweisendes Leiterende (4b) auf der ersten Seite (14) zumindest eine erhabene Struktur (8) an dem zweiten Bereich (9b) aufweist, während die ersten Bereiche (9a) sowohl des die Strukturen (8) aufweisenden Leiterendes (4b) als auch des auf der ersten Seite (14) benachbarten Leiterendes (4b) frei von erhabenen Strukturen (8) sind, und/oder dass zumindest ein Strukturen (8) aufweisendes Leiterende (4b) auf der zweiten Seite (15) zumindest eine erhabene Struktur (8) an dem ersten Bereich (9a) und zumindest eine erhabene Struktur (8) an dem zweiten Bereich (9b) aufweist.

4. Stator (1) nach einem der vorhergehenden Ansprüche, **dadurch gekennzeichnet, dass** zwei verbundene Leiterenden (4b) einen stoffschlüssigen Verbindungsbereich (13), insbesondere eine Schweißnaht, aufweisen, wobei zumindest eines der zwei elektrisch verbundenen Leiterenden (4b) eine Ausnehmung (12) aufweist, die unmittelbar an den Verbindungsbereich (13) anschließt.

5. Stator (1) nach einem der vorhergehenden Ansprüche, **dadurch gekennzeichnet, dass** die erhabenen Strukturen (8) durch punktförmige und/oder linienförmige und/oder V-förmige und/oder X-förmige und/oder flächige Erhebungen gebildet sind.

6. Stator (1) nach einem der vorhergehenden Ansprüche, **dadurch gekennzeichnet, dass** die Strukturen (8) durch Prägen oder durch ein Auftragsverfahren oder durch Aufschmelzen oder durch Abtragen hergestellt sind.

7. Elektrische Maschine (10) aufweisend einen Stator (1) nach einem der vorhergehenden Ansprüche sowie einen Rotor (11), der durch den Stator (1) antreibbar ist.

8. Verfahren zum Herstellen eines Stators (1) einer elektrischen Maschine (10) nach einem der Ansprüche 1 bis 6, aufweisend die Schritte:
Anordnen von Leiterschenkeln (4a) von Leiterelementen (4) einer Steckwicklung in Statornuten (3) eines Statorkörpers (2), so dass Leiterenden (4b) an zumindest einer Stirnseite des Statorkörpers (2) hervorstehen, und Bilden von mehreren in Umfangsrichtung bezüglich einer Statorachse (100) des Statorkörpers (2) verteilten Gruppen (7), wobei jede Gruppe (7) mehrere entlang einer bezüglich der Statorachse (100) radialen Richtung angeordnete, insbesondere in radialer Richtung fluchtende, Leiterenden (4b) umfasst, **gekennzeichnet durch** die Schritte:
Aufbringen einer Spannkraft (200) **durch** Einspannen der gesamten Gruppe (7) von Leiterenden (4b) zwischen zwei Spannbacken,
• wobei zumindest eines, insbesondere mehrere, der Leiterenden (4b) jeder Gruppe (7) in radialer Richtung gesehen beidseitig angeordnete erhabene Strukturen (8) aufweist,
• wobei **durch** zumindest eine erhabene Struktur (8) auf einer ersten Seite (14) des Leiterendes (4b) eine **durch** die Spannbacken elastisch oder plastisch bewirkte Annäherung zwischen dem zur ersten Seite (14) benachbarten Leiterende (4b) und dem Strukturen (8) aufweisenden Leiterende (4b) erfolgt,
• wobei **durch** zumindest eine erhabene Struktur (8) auf einer gegenüberliegenden zweiten Seite (15) einen Abstand zwischen dem zur zweiten Seite (15) benachbarten Leiterende (4b) und dem Strukturen (8) aufweisenden Leiterende (4b) aufrechterhalten wird, und elektrisches Verbinden des zumindest einen Strukturen (8) aufweisenden Leiterendes (4b) mit dem auf der ersten Seite (14) benachbarten und elastisch oder plastisch verformten Leiterende (4b).

9. Verfahren nach Anspruch 8, **gekennzeichnet durch** den Schritt des Einbringens eines radialen Abstandes zwischen dem Strukturen (8) aufweisenden Leiterende (4b) und dem auf der zweiten Seite (15) benachbarten Leiterende (4b).

10. Verfahren nach Anspruch 8 oder 9, **dadurch gekennzeichnet, dass** elektrisch zu verbindende Leiterenden (4b) stoffschlüssig verbunden, insbesondere verschweißt, besonders bevorzugt laserverschweißt, werden.

## Claims

1. Stator (1) of an electrical machine (10) having a stator body (2) which has a stator axis (100) and comprises stator grooves (3), in which an electrical plug-in winding runs which is formed from a multiplicity of conductor elements (4), wherein conductor elements (4) are provided which each run with conductor legs (4a) through one or two of the stator grooves (3) and project with conductor ends (4b) from the stator grooves (3) on at least one end side (5) of the stator (1) and form a winding head (6), wherein the conductor ends (4b) of the conductor elements (4) in the respective winding head (6) are arranged in a plurality of groups (7) distributed in the circumferential direction with respect to the stator axis (100), wherein each group (7) comprises a plurality of conductor ends (4b) arranged along a radial direction with respect to the stator axis (100), in particular aligned in the radial direction,
**characterized in that**
at least one, in particular a plurality, of the conductor ends (4b) of each group (7), as viewed in the radial direction, has/have raised structures (8) arranged on both sides, such that, during clamping of the entire group (7) of conductor ends (4b) between two clamping jaws, the raised structures (8) on a first side (14) of the conductor end (4b) permit an approximation brought about elastically or plastically by the clamping jaws between the conductor end (4b) adjacent to the first side (14) and the conductor end (4b) having structures (8) for welding of the respective conductor ends (4b), and, on an opposite second side (15), maintain a spacing between the conductor end (4b) adjacent to the second side (15) and the conductor end (4b) having structures (8) in order to prevent welding of the respective conductor ends (4b).

2. Stator (1) according to Claim 1, **characterized in that** each raised structure (8) is arranged so as to lie opposite a raised structure (8) of another conductor end (4b) or a side surface of another conductor end (4b).

3. Method (1) according to either of the preceding claims, **characterized**
**in that** each conductor end (4b) has a first region (9a), directly adjacent to a front side (4c) of the conductor element (4) and extending in the longitudinal direction of the conductor element (4), and a second region (9b), directly adjacent to the first region (9a) and extending in the longitudinal direction of the conductor element (4),
**in that** at least one conductor end (4b) having structures (8) has, on the first side (14), at least one raised structure (8) on the second region (9b), while the first regions (9a) of both the conductor end (4b) having the structures (8) and the conductor end (4b) adjacent on the first side (14) are free of raised structures (8), and/or
**in that** at least one conductor end (4b) having structures (8) has, on the second side (15), at least one raised structure (8) on the first region (9a) and at least one raised structure (8) on the second region (9b).

4. Stator (1) according to any one of the preceding claims, **characterized in that** two connected conductor ends (4b) have an integrally joined connection region (13), in particular a welded seam, wherein at least one of the two electrically connected conductor ends (4b) has a recess (12) which is directly adjacent to the connection region (13).

5. Stator (1) according to any one of the preceding claims, **characterized in that** the raised structures (8) are formed by point-shaped and/or line-shaped and/or V-shaped and/or X-shaped and/or planar elevations.

6. Stator (1) according to any one of the preceding claims, **characterized in that** the structures (8) are manufactured by embossing or by an application process or by fusing or by removal.

7. Electrical machine (10) having a stator (1) according to any of the preceding claims and a rotor (11) which can be driven by the stator (1).

8. Method for producing a stator (1) of an electrical machine (10) according to any one of Claims 1 to 6, comprising the steps of:
arranging conductor legs (4a) of conductor elements (4) of a plug-in winding in stator grooves (3) of a stator body (2), such that conductor ends (4b) project on at least one end face of the stator body (2), and forming a plurality of groups (7) distributed in the circumferential direction with respect to a stator axis (100) of the stator body (2), wherein each group (7) comprises a plurality of conductor ends (4b) arranged along a radial direction relative to the stator axis (100), in particular aligned in the radial direction, **characterized by** the steps of:
applying a clamping force (200) by clamping the entire group (7) of conductor ends (4b) between two clamping jaws,
• wherein at least one, in particular a plurality, of the conductor ends (4b) of each group (7), as viewed in the radial direction, has/have raised structures (8) arranged on both sides,
• wherein, by at least one raised structure (8) on a first side (14) of the conductor end (4b), an approximation brought about elastically or plastically by the clamping jaws between the conductor end (4b) adjacent to the first side (14) and the conductor end (4b) having structures (8) is effected,
• wherein, by at least one raised structure (8) on an opposite second side (15), a spacing between the conductor end (4b) adjacent to the second side (15) and the conductor end (4b) having structures (8) is maintained, and electrically connecting the conductor end (4b) having at least one structure (8) to the conductor end (4b) which is adjacent on the first side (14) and is elastically or plastically deformed.

9. Method according to Claim 8, **characterized by** the step of introducing a radial spacing between the conductor end (4b) having structures (8) and the adjacent conductor end (4b) on the second side (15).

10. Method according to Claim 8 or 9, **characterized in that** conductor ends (4b) to be electrically connected are connected together in an integrally joined manner, in particular welded, particularly preferably laser-welded.

## Revendications

1. Stator (1) d'une machine électrique (10) avec un corps (2) de stator comportant un axe (100) de stator, qui comprend des rainures (3) de stator, dans lesquelles s'étend un enroulement électrique enfichable, qui est formé à partir d'une pluralité d'éléments conducteurs (4), des éléments conducteurs (4) étant prévus, qui s'étendent chacun par des branches de conducteur (4a) à travers une ou deux des rainures (3) de stator et font saillie par des extrémités de conducteur (4b) des rainures (3) de stator sur au moins un côté frontal (5) du stator (1) et forment une tête d'enroulement (6), les extrémités de conducteur (4b) des éléments conducteurs (4) étant disposées en plusieurs groupes (7) répartis dans la direction périphérique par rapport à l'axe (100) de stator dans la tête d'enroulement (6) respective, chaque groupe (7) comprenant plusieurs extrémités de conducteur (4b) disposées le long d'une direction radiale par rapport à l'axe (100) de stator, en particulier alignées dans la direction radiale,
**caractérisé en ce que**
au moins une, en particulier plusieurs, des extrémités de conducteur (4b) de chaque groupe (7) comporte/comportent des structures en relief (8) disposées des deux côtés, vues dans la direction radiale, de telle manière que, lorsque l'ensemble du groupe (7) d'extrémités de conducteur (4b) est serré entre deux mâchoires de serrage, les structures en relief (8) sur un premier côté (14) de l'extrémité de conducteur (4b) permettent un rapprochement provoqué élastiquement ou plastiquement par les mâchoires de serrage entre l'extrémité de conducteur (4b) adjacente au premier côté (14) et l'extrémité de conducteur (4b) comportant des structures (8) pour souder les extrémités de conducteur (4b) concernées et maintiennent, sur un deuxième côté (15) opposé, une distance entre l'extrémité de conducteur (4b) adjacente au deuxième côté (15) et l'extrémité de conducteur (4b) comportant des structures (8) pour empêcher un soudage des extrémités de conducteur (4b) concernées.

2. Stator (1) selon la revendication 1, **caractérisé en ce que** chaque structure en relief (8) est disposée en vis-à-vis d'une structure en relief (8) d'une autre extrémité de conducteur (4b) ou d'une face latérale d'une autre extrémité de conducteur (4b).

3. Stator (1) selon l'une des revendications précédentes, **caractérisé en ce que** chaque extrémité de conducteur (4b) comporte une première zone (9a) se raccordant directement à un côté frontal (4c) de l'élément conducteur (4) et s'étendant dans la direction longitudinale de l'élément conducteur (4) et une deuxième zone (9b) se raccordant directement à la première zone (9a), s'étendant dans la direction longitudinale de l'élément conducteur (4),
qu'au moins une extrémité de conducteur (4b) comportant des structures (8) comporte, sur le premier côté (14), au moins une structure en relief (8) sur la deuxième zone (9b), alors que les premières zones (9a) à la fois de l'extrémité de conducteur (4b) comportant les structures (8) et de l'extrémité de conducteur (4b) adjacente sur le premier côté (14) sont exemptes de structures en relief (8), et/ou
qu'au moins une extrémité de conducteur (4b) comportant des structures (8) comporte, sur le deuxième côté (15), au moins une structure en relief (8) sur la première zone (9a) et au moins une structure en relief (8) sur la deuxième zone (9b).

4. Stator (1) selon l'une des revendications précédentes, **caractérisé en ce que** deux extrémités de conducteur (4b) connectées comportent une zone de connexion (13) à liaison de matière, en particulier un cordon de soudure, au moins une des deux extrémités de conducteur (4b) connectées électriquement comportant un évidement (12) qui se raccorde directement à la zone de connexion (13).

5. Stator (1) selon l'une des revendications précédentes, **caractérisé en ce que** les structures en relief (8) sont formées par des parties surélevées ponctuelles et/ou linéaires et/ou en forme de V et/ou en forme de X et/ou à plat.

6. Stator (1) selon l'une des revendications précédentes, **caractérisé en ce que** les structures (8) sont fabriquées par estampage ou par un procédé d'application ou par fusion ou par enlèvement de matière.

7. Machine électrique (10) comportant un stator (1) selon l'une des revendications précédentes ainsi qu'un rotor (11) qui peut être entraîné par le stator (1).

8. Procédé permettant de fabriquer un stator (1) d'une machine électrique (10) selon l'une des revendications 1 à 6, comportant les étapes :
disposition de branches de conducteur (4a) d'éléments conducteurs (4) d'un enroulement enfichable dans des rainures (3) de stator d'un corps (2) de stator de telle sorte que des extrémités de conducteur (4b) dépassent d'au moins un côté frontal du corps (2) de stator, et formation de plusieurs groupes (7) répartis dans la direction périphérique par rapport à un axe (100) de stator du corps (2) de stator, chaque groupe (7) comprenant plusieurs extrémités de conducteur (4b) disposées le long d'une direction radiale par rapport à l'axe (100) de stator, en particulier alignées dans la direction radiale, **caractérisé par** les étapes :
application d'une force de serrage (200) en serrant l'ensemble du groupe (7) d'extrémités de conducteur (4b) entre deux mâchoires de serrage,
• au moins une, en particulier plusieurs, des extrémités de conducteur (4b) de chaque groupe (7) comportant des structures en relief (8) disposées des deux côtés, vues dans la direction radiale,
• un rapprochement provoqué élastiquement ou plastiquement par les mâchoires de serrage entre l'extrémité de conducteur (4b) adjacente au premier côté (14) et l'extrémité de conducteur (4b) comportant des structures (8) étant effectué par au moins une structure en relief (8) sur un premier côté (14) de l'extrémité de conducteur (4b),
• une distance entre l'extrémité de conducteur (4b) adjacente au deuxième côté (15) et l'extrémité de conducteur (4b) comportant des structures (8) étant maintenue par au moins une structure en relief (8) sur un deuxième côté (15) opposé, et
connexion électrique de l'au moins une extrémité de conducteur (4b) comportant des structures (8) à l'extrémité de conducteur (4b) adjacente sur le premier côté (14) et déformée élastiquement ou plastiquement.

9. Procédé selon la revendication 8, **caractérisé par** l'étape d'introduction d'une distance radiale entre l'extrémité de conducteur (4b) comportant des structures (8) et l'extrémité de conducteur (4b) adjacente sur le deuxième côté (15).

10. Procédé selon la revendication 8 ou 9, **caractérisé en ce que** des extrémités de conducteur (4b) à connecter électriquement sont connectées par liaison de matière, en particulier sont soudées, de manière particulièrement préférée sont soudées au laser.
